## Europäisches Patentamt

## European Patent Office

## Office européen des brevets

(11) Veröffentlichungsnummer: **0 230 964**
**A2**

(12) # EUROPÄISCHE PATENTANMELDUNG

(21) Anmeldenummer: **87100716.7**

(22) Anmeldetag: **20.01.87**

(51) Int. Cl.⁴: **B 05 C 19/02**

(30) Priorität: **28.01.86 DE 3602388**

(43) Veröffentlichungstag der Anmeldung:
**05.08.87 Patentblatt 87/32**

(84) Benannte Vertragsstaaten:
**AT CH ES FR GB IT LI SE**

(71) Anmelder: **Ransburg-Gema AG
Mövenstrasse 17
CH-9015 St. Gallen (CH)**

(72) Erfinder: **Gelain, Silvano
Sonnenrainweg 6
CH-9008 St. Gallen (CH)**

(74) Vertreter: **Vetter, Ewald Otto, Dipl.-Ing.(FH)
Bahnhofstrasse 30
D-8900 Augsburg (DE)**

(54) **Pulverbeschichtungseinrichtung.**

(57) In fluidisiertes Pulver (18) in einem Pulverbehälter (4) sind Glocken (14) eingetaucht, in welchen dem Pulver beizumischender Stoff über den Glockenquerschnitt verteilt und über die Öffnung (16) der Glocken dem fluidisierten Pulver zugegeben wird. Ein in der Glocke (14) herrschender Überdruck verhindert ein zu weites Eindringen von fluidisiertem Pulver (18) in die Glocke. Dadurch können auch kleine Mengen zusätzlicher Stoffe sehr fein dosiert und gleichmäßig verteilt dem fluidisierten Pulver hinzugefügt werden.

FIG. 1

EP 0 230 964 A2

Bundesdruckerei Berlin

**Beschreibung**

Pulverbeschichtungseinrichtung

Die Erfindung betrifft eine Pulverbeschichtungseinrichtung nach dem Oberbegriff des Patentanspruches 1.

Vorzugsweise handelt es sich um eine Pulverbeschichtungseinrichtung zum Beschichten von Gegenständen mit Emailpulver, welches in einem Pulverbehälter, in welchem das Emailpulver durch Gas aus dem Behälterboden in einem fluidisierten Zustand oder Schwebezustand gehalten wird, mit Dampf auf einem bestimmten Feuchtigkeitsgehalt und einer bestimmten Temperatur gehalten wird. Eine solche Pulverbeschichtungseinrichtung für Emailpulver ist aus der US-PS 4 500 560 bekannt. Dies ist das bevorzugte Anwendungsgebiet der Erfindung. Die Erfindung ist jedoch nicht auf Emailpulver und auch nicht auf die Befeuchtung dieses Emailpulvers mit Dampf beschränkt. Statt Dampf kann Wasser im Pulverbehälter zerstäubt werden, oder es kann dem Pulver ein chemisches Reaktionsmittel in gasförmiger, flüssiger oder pulverförmiger Form beigemischt werden. Anstatt Emailpulver können auch Kunststoffpulver verwendet werden.

Durch die Erfindung soll die Aufgabe gelöst werden, Zusatzstoffe, die dem fluidisierten Beschichtungspulver (Pulver-Gas-Gemisch) zugefährt werden, in diesem gleichmäßiger zu verteilen, auch dann, wenn die zugeführte Menge des Zusatzstoffes sehr viel kleiner ist als die im Pulverbehälter enthaltene Menge an Beschichtungspulver, beispielsweise wenige Milligramm Zusatzstoff auf mehrere Kilogramm Beschichtungspulver.

Diese Aufgabe wird gemäß der Erfindung durch die kennzeichnenden Merkmale des Patentanspruches 1 gelöst.

Die Erfindung beruht im wesentlichen auf der Erkenntnis des Erfinders, daß sich fluidisiertes Pulver (Pulver im aufgewirbelten Schwebezustand in Gas) sich gleich verhält wie Wasser, wenn man eine Glocke oder Haube mit ihrem unten offenen Ende in das fluidisierte Pulver eintaucht. Der Erfinder erkannte, daß das Pulver-Gas-Gemisch des fluidisierten Pulvers die in der Glocke vorhandene Luft komprimiert, ohne daß sich das Gas des fluidisierten Pulvers mit der Luft mischt. Dadurch entsteht in der Glocke ein Überdruck, durch welchen das fluidisierte Pulver aus der Glocke verdrängt wird und die Oberfläche des fluidisierten Pulvers in der Glocke eine niedrigere Höhe hat als die Oberfläche des fluidisierten Pulvers außerhalb der Glocke. Ein wesentlicher Teil der Erfindung besteht in der weiteren Erkenntnis des Erfinders, daß dadurch der gesamte innere Querschnitt der Glocke oder Haube als große Verteilerfläche verwendet werden kann, durch welche auch kleinste Mengen zusätzlicher Stoffe in fein verteilter Form in das fluidisierte Pulver eingebracht werden können. Im Vergleich hierzu kann eine Gasdüse betrachtet werden, deren Öffnung viel kleiner ist als der innere Querschnitt der Glocke. In besonderer Anwendung der Erfindung kann über eine oder mehrere Gasdüsen Dampf in die Glocke eingebracht werden, wobei sich der Dampf in der Glocke über den gesamten Öffnungsquerschnitt der Glocke verteilt, bevor sich der Dampf an der Glockenöffnung mit dem fluidisierten Pulver vermischt. Eine nochmals weitere wichtige Erkenntnis der Erfindung besteht darin, daß zwischen dem mit der Öffnung versehenen unteren Ende der Glocke und dem Boden des Behälters eine besonders starke Verwirbelung der Pulverteilchen und dadurch eine besonders starke und gleichmäßige Vermischung der Pulverteilchen im Gas und zusätzlich zugeführtem Stoff im fluidisierten Pulver stattfindet, wenn der Boden des Behälters ein sogenannter Fluidisierboden ist. Solche Böden sind bekannt, z.B. aus der genannten US-PS 4 500 560. Dabei handelt es sich um einen Boden, welcher Durchtrittsöffnungen für Gas hat, so daß von einer unter dem Boden gelegenen Druckgaskammer Gas durch den Boden hindurch in den darüber befindlichen Raum des Pulverbehälters gelangen und dort das Pulver aufwirbeln (fluidisieren) kann.

Weitere Merkmale der Erfindung sind in den Unteransprüchen enthalten.

Die Erfindung wird nunmehr mit Bezug auf die Zeichnungen beschrieben, welche eine bevorzugte Ausführungsform der Erfindung als Beispiel zeigen. Im einzelnen zeigen

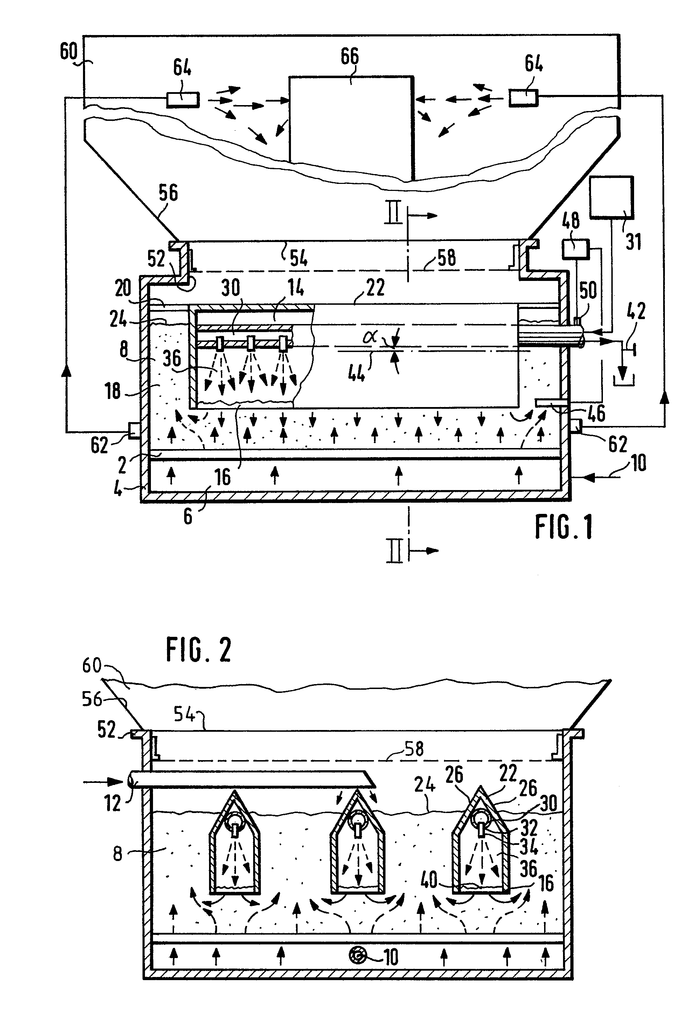

Fig. 1 einen schematischen Querschnitt durch einen Pulverbehälter einer Pulverbeschichtungseinrichtung nach der Erfindung, und

Fig. 2 einen schematischen Längsschnitt durch den Pulverbehälter der Pulverbeschichtungseinrichtung von Fig. 1.

Die in den Zeichnungen dargestellte Beschichtungseinrichtung dient zum Beschichten von Gegenständen mit Emailpulver, welches durch Zufuhr von Dampf in einen Pulverbehälter mit einer bestimmten Feuchtigkeit versehen und auf einer bestimmten Temperatur gehalten wird.

Ein für Gas durchlässiger Fluidisierboden 2 unterteilt den Innenraum eines Pulverbehälters 4 in eine untere Druckgaskammer 6 und einen darüber befindlichen Behälterraum 8. Der Druckgaskammer 6 wird über eine Zuleitung 10 Gas zugeführt, welches durch den Fluidisierboden 2 hindurchströmt und dadurch im Behälterraum 8 befindliches Pulver aufwirbelt, vermischt und in einem Schwebezustand hält. Diese Pulver-Gas-Mischung wird im folgenden als "fluidisiertes Pulver" bezeichnet. Dem Behälterraum 8 kann frisches Pulver über eine Leitung 12 zugeführt werden.

Im Behälterraum 8 sind mehrere Glocken oder Hauben 14 mit ihrer Öffnung 16 nach unten ragend in dem fluidisierten Pulver 18 angeordnet. Und durch Halter 20 am Pulverbehälter 4 befestigt. Die Glocken 14 haben einen gasdichten Glockenmantel und die Form von umgekehrt angeordneten Rinnen. Anstatt des in den Zeichnungen gezeigten rechteckigen Querschnittes könnten die Glocken 14 eine runde oder quadratische oder andere Querschnittsform haben. Die oberen Enden 22 ragen über die Oberfläche 24 des fluidisierten Pulvers 18 hinaus und haben Oberflächen 26, die um mehr als 45 Grad schräg verlaufen, so daß auf diese Oberflächen 26 fallende Pulverteilchen in das fluidisierte Pulver 18 abrutschen. In jeder Glocke 14 befindet sich im oberen Teil ein längs durch sie hindurchgehendes Rohr 30, welches an eine Dampfquelle 31 angeschlossen ist. Das Rohr ist an seiner unteren Mantellinie mit einer Vielzahl von Öffnungen 32 versehen, in welchen kurze Düsenrohre 34 befestigt sind. Diese reichen bis in die radiale Mitte des Rohres 30 und führen von dort Dampf aus dem Rohr 30 in den Innenraum 36 der Glocke 14. Der Dampf breitet sich über den gesamten Querschnitt des Innenraumes 36 aus, erzeugt darin einen Überdruck, und vermischt sich an der Öffnung 16 der Glocke mit dem fluidisierten Pulver 18. Der im Innenraum 36 herrschende Überdruck bewirkt, da sich das fluidisierte Pulver 18 wie Wasser verhält, daß die Oberfläche 40 des fluidisierten Pulvers wesentlich niedriger liegt als dessen Oberfläche 24 im Behälterraum 8.

Das Rohr 30 hat von seinen Auslaßöffnungen 32 zu einer Abzugseinrichtung 42 hin ein Gefälle unter einem bestimmten Winkel α zu einer Horizontalebene 44, so daß im Rohr 30 vorhandenes Kondenswasser zur Abzugseinrichtung 42 fließen und entfernt werden kann. Wenn über das Rohr 30 nicht Dampf, sondern Wasser in die Glocke 14 versprüht wird, kann die Abzugseinrichtung 42 unter Ausnutzung des Gefälles des Rohres 30 dazu dienen, das Rohr 30 zeitweise zu entleeren.

Mit einer Meßsonde 46 kann die im fluidisierten Pulver 18 herrschende Feuchtigkeit und Temperatur gemessen werden. In Abhängigkeit vom Meßergebnis kann über eine Regeleinrichtung 48 ein Stellglied 50 am Rohr 30 betätigt und dadruch die Zufuhr von Dampf von der Dampfquelle 31 zu dem Rohr 30 geregelt werden.

Ein besonderer Vorteil der Erfindung ist es, daß der Pulverbehälter 4, im Gegensatz zum Pulverbehälter nach der US-PS 4 500 560, nicht gasdicht verschlossen sein muß. Dadurch ist es möglich, das obere Ende des Pulverbehälters 4 mit einer Öffnung 52 zu versehen, über welche in den Behälterraum 8 Pulver gegeben werden kann. Entsprechend der in der Zeichnung dargestellten Ausführungsform is is an eine Öffnung 54 im Boden 56 einer Beschichtungskabine 60 angeschlossen, so daß überschüssiges Pulver aus der Beschichtungskabine 60 direkt in den Behälterraum 8 fällt, ohne daß zusätzliche Einrichtungen erforderlich sind. Im Durchgang zwischen der Kabinenöffnung 54 und der Behälteröffnung 52 befindet sich ein Sieb 58 zur Reinigung und Verteilung des in der Kabine 60 herunterfallenden Pulvers. Das fluidisierte Pulver 18 wird dem Pulverbehälter 4 durch Fördereinrichtungen 62 entnommen und in der Kabine 60 durch Sprühvorrichtungen 64 auf einen zu beschichtenden Gegenstand 66 gespritzt.

Betriebsweise:

Dem fluidisierten Emailpulver 18 wird im Behälterraum 8 Feuchtigkeit zugeführt, um einen Rücksprüheffekt an dem mit Emailpulver zu beschichtenden Gegenstand 66 zu vermeiden. Der "Rücksprüheffekt" besteht darin, daß an dem zu beschichtenden Gegenstand 66 eine Rückionisation der Pulverteilchen auftreten kann, durch welche die Pulverteilchen nicht am Gegenstand 66 haften, sondern von diesem zurückgesprüht werden. Siehe US-PS 4 500 560. Durch vorliegende Erfindung ist es möglich, die Feuchtigkeit direkt im fluidisierten Pulver 18 genau zu dosieren. Von den Sprühvorrichtungen 64 versprühtes, jedoch nicht am Gegenstand 66 haftendes Emailpulver gelangt durch das Rüttelsieb 58 in den Behälterraum 8. Die Düsenrohre 34 entnehmen dem Rohr 30 Dampf in dessen radialer Mitte, also in der heißesten Zone. Dadurch wird gewährleistet, daß aus dem Rohr 30 nur Dampf ohne Dampfkondensat in die Glocke 14 geleitet wird. Im Rohr 30 anfallendes Kondensat kann im Rohr 30 zur Abzugseinrichtung 42 abfließen. Dadurch, daß die Glocken 14 in das fluidisierte Pulver 18 eingetaucht sind, entsteht in diesen Glocken 14 ein Überdruck, durch welchen in diesem Bereich das fluidisierte Pulver 18 verdrängt wird. Dadurch sind die Rohre 30 frei von Pulver. Der über die Düsenrohre 34 aus dem Rohr 30 ausströmende Dampf kann ungehindert und mit Druck in das fluidisierte Pulver 18 eingebracht werden. Die Glocken 14 bewirken eine gute und homogene Durchmischung von fluidisiertem Pulver 18 mit Dampfpartikeln. Durch Verwendung der Glocken 14 kann die Dampf-Pulvermischung viel feiner eingestellt werden, als mit bekannten Einrichtungen. Das aus dem Fluidboden 2 zur Fluidisierung des Pulvers in den Behälterraum 8 strömende Druckgas der Druckgaskammer 6 "prallt" gegen das Druckkissen an der Öffnung 16 jeder Glocke 14, wodurch eine zusätzliche Verwirbelung der Pulver-Gas-Mischung zwischen Behälterboden 2 und Glocke 14 entsteht.

**Patentansprüche**

1. Pulverbeschichtungseinrichtung mit einem Pulverbehälter (4), in welchem Beschichtungspulver durch Gas in einem fluidisierten Zustand gehalten wird,
**gekennzeichnet durch**
mindestens eine Glocke (14), die mindestens mit ihrem unten offenen Ende (16) in das fluidisierte Pulver (18) eingetaucht ist, und in welcher ein Überdruck herrscht, der fluidisiertes Pulver aus der Glocke (14) verdrängt, und durch eine Zufuhreinrichtung (30) zur Zufuhr von strömungsfähigem Stoff in die Glocke (14), welcher über die Glockenöffnung (16) in das fluidisierte Pulver (18) verteilt wird.

2. Einrichtung nach Anspruch 1,
**dadurch gekennzeichnet,**
daß die Zufuhreinrichtung (30) an eine Versorgungseinrichtung (31) zur Zufuhr des Stoffes in die Glocke oder Glocken (14) mit Überdruck angeschlossen ist.

3. Einrichtung nach Anspruch 1 oder 2,
**dadurch gekennzeichnet,**
daß die Öffnung (16) der Glocke oder Glocken (14) mit Abstand über einem gasdurchlässigen Fluidboden (2) angeordnet ist, der sich zwischen einem Druckgasraum (6) und einem Pulverraum (8) des Pulverbehälters (4) befindet.

4. Einrichtung nach einem der Ansprüche 1 bis 3,

**dadurch gekennzeichnet,**

daß die Glockenoberfläche (26) eine Neigung hat, durch welche auf die Glockenoberfläche fallende Pulverteilchen abrutschen.

5. Einrichtung nach einem der Ansprüche 1 bis 4,

**dadurch gekennzeichnet,**

daß die Zufuhreinrichtung für den strömungsfähigen Stoff ein Rohr (30) mit mindestens einer Auslaßöffnung (32) aufweist, und daß dieses Rohr von der Auslaßöffnung bis hin zu einer Abzugseinrichtung (42) ein Gefälle zum Abziehen von Kondenswasser oder anderer Flüssigkeit hat.

6. Einrichtung nach Anspruch 5,

**dadurch gekennzeichnet,**

daß die jeweils in der Glocke (14) gelegene Auslaßöffnung oder gelegenen Auslaßöffnungen (32) des Rohres (30) an ein Auslaßrohr (34) angeschlossen ist oder sind, dessen eine Ende in der Glocke (14) ausmündet und dessen anderes Ende ungefähr in radialer Mitte des Rohres (30) ausmündet.

7. Einrichtung nach einem der Ansprüche 1 bis 6,

**dadurch gekennzeichnet,**

daß die Zufuhreinrichtung (30) als Verteiler ausgebildet ist, welcher den Stoff in der Glocke oder in den Glocken (14) auf den gesamten Querschnitt der Öffnung (16) der Glocke verteilt.

8. Einrichtung nach einem der Ansprüche 1 bis 7,

**dadurch gekennzeichnet,**

daß die Zufuhreinrichtung (30) an eine Regeleinrichtung (48) angeschlossen ist, welche in Abhängigkeit des Meßergebnisses einer im fluidisierten Pulver 18 gelegenen Meßsonde (46) die Zufuhr des Stoffes durch die Zufuhreinrichtung (30) regelt.

0230964

FIG.1

FIG. 2